Europäisches Patentamt

European Patent Office

Office européen des brevets

(11) Veröffentlichungsnummer: **0 457 143 A1**

# (12) EUROPÄISCHE PATENTANMELDUNG

(21) Anmeldenummer: 91107283.3

(51) Int. Cl.5: **G01N 27/30**

(22) Anmeldetag: 06.05.91

(30) Priorität: 18.05.90 CH 1685/90

(43) Veröffentlichungstag der Anmeldung:
21.11.91 Patentblatt 91/47

(84) Benannte Vertragsstaaten:
**CH DE FR GB IT LI**

(71) Anmelder: **INGOLD MESSTECHNIK AG**
**Industrie Nord**
**CH-8902 Urdorf(CH)**

(72) Erfinder: **Zeidler, Willi**
**Bresslauerstrasse 51**
**W-6980 Wertheim(DE)**

(74) Vertreter: **Schmauder, Klaus Dieter et al**
**Schmauder & Wann Patentanwaltsbüro**
**Zwängiweg 7**
**CH-8038 Zürich(CH)**

(54) **Bezugselektrode zur Kombination mit einer Messwertgebersonde, Diaphragma für die Bezugselektrode und Verfahren zu dessen Herstellung.**

(57) Es werden eine Bezugselektrode für eine Messwertgebersonde und ein deren wesentlichen Bestandteil bildendes Diaphragma (16) beschrieben. Das Diaphragma (16) ist in ein in der Wandung des Elektrodenschaftes (2) angeordnetes Loch eingepasst und schliesst den von der Wandung des Elektrodenschaftes umgebenen Sondeninnenraum ab. Das Diaphragma (16) ist aus einem mindestens teilweise geschlossenen Hohlkörper und einem Durchlassbereich (20), der den Hohlkörper umgibt, gebildet. Der Hohlkörper ist aus einem porenfreien Material, vorzugsweise Glas gebildet, das vorzugsweise thermisch verformbar, bei der Betriebstemperatur der Bezugselektrode jedoch formstabil ist. Dadurch wird ein problemloses Einpassen des Hohlkörpers in das Loch des Elektrodenschaftes ermöglicht, so dass der der radialen Ausdehnung des Durchlassbereiches (20) entsprechende Abstand zwischen seiner äusseren Oberfläche und der Lochwandung durch deren Oberflächenrauheit bestimmt ist. Aufgrund dieser Oberflächenrauheit befinden sich im Durchlassbereich (20) Hohlräume (22), die einen Stoffaustausch gestatten und deren Abmessungen exakt einstellbar sind.

Figur 3

EP 0 457 143 A1

Die Erfindung betrifft eine Bezugselektrode zur Kombination mit einer Messwertgebersonde für die potentiometrische oder amperometrische Bestimmung von in einem Messmedium enthaltenen ionischen oder nicht-ionischen Bestandteilen gemäss Oberbegriff des Patentanspruchs 1, ein Diaphragma gemäss Oberbegriff des Patentanspruchs 2 und ein Verfahren zur Herstellung des Diaphragmas gemäss Oberbegriff des Patentanspruchs 7.

Bezugselektroden zur Kombination mit Messwertgebersonden für potentiometrische Bestimmungen, wie ionensensitive Elektroden, z.B. pH-Elektroden, und für amperometrische Bestimmungen, die ein konstantes Bezugspotential für derartige Messungen liefern, sind bekannt.

Die bekannten Bezugssysteme beinhalten in der Regel eine Halbzelle, z.B. aus Silber-Silberchlorid, die in eine Lösung mit konstanter Chloridionenkonzentration eintaucht, und weisen Diffusionsübergänge, die im Betriebszustand der Messwertgebersonde einen Stoffaustausch zwischen dem Sondeninnenraum und dem Messmedium gestatten, in vielfältiger Form auf. Der Diffusionsübergang kann beispielsweise durch ein Diaphragma aus Keramik, Platin oder Kunststoff, z.B. Polytetrafluorethylen, oder durch eine sehr kleine Oeffnung in der Sondenwandung gebildet sein, wobei im letzteren Fall der im Sondeninnenraum untergebrachte Elektrolyt eine ausreichende Viskosität aufweisen muss und bevorzugt in Form eines Gels aus Agar-Agar, einem Acrylpolymer oder -copolymer oder aus Polyvinylchlorid vorliegt, in das üblicherweise KCl-Ionen eingelagert sind.

Die, gegebenenfalls gel-fixierte, Elektrolytlösung ist bei den bekannten Bezugssystemen über ein Diaphragma, welches in der Regel aus einem porösen Körper aus einem der genannten Materialien besteht, im Betriebszustand der Sonde mit einem Messmedium verbunden. Bei diesen Bezugssystemen können durch die nicht auszuschliessende Möglichkeit einer Kontamination von aussen, insbesondere durch eine Verschmutzung oder Verstopfung der Poren des Diaphragmas durch Inhaltsstoffe des Messmediums, z.B. durch Kristallbildung oder Festsetzen der Inhaltsstoffe, Störungen verursacht werden, die dazu führen, dass die Bezugssysteme nicht potentialkonstant sind. Da durch die in bekannten Bezugssystemen verwendeten Diaphragmen aufgrund von Konzentrationsunterschieden zwischen dem Bezugselektrolyten und dem Messmedium ein Stoffaustausch in beiden Richtungen erfolgen kann, ist ausserdem eine Vergiftung des Bezugselektrolyten und des Ableitsystems durch Inhaltsstoffe des Messmediums möglich.

Wird als Diffusionsübergang ein Platindiaphragma eingesetzt, so besteht, da Platin ein Elektronenleiter ist, die Gefahr, dass das Platindiaphragma bei leichten Verunreinigungen als Redox-Elektrode reagieren kann. Dadurch entsteht beispielsweise bei pH-Messungen in stark reduzierenden oder oxydierenden Medien ein zusätzliches unkontrolliertes Potential.

Wird der Diffusionsübergang durch ein Keramikdiaphragma gebildet, so wirkt es sich nachteilig aus, dass dieses ein ausgesprochenes Labyrinthsystem in Richtung von aussen nach innen und in umgekehrter Richtung bildet, was eine ungerichtete und unter Umständen sehr lange Diffusionsstrecke zur Folge hat. Keramik wirkt schwammartig und zieht aufgrund freier Valenzen Fremdstoffe an, beispielsweise Calciumcarbonate, die in den Poren des Keramikdiaphragmas auskristallisieren können, wodurch es zu einer Verstopfung der Poren des Diaphragmas kommt. Ausserdem wirkt sich die Gedächtnisfähigkeit von Keramik nachteilig aus, d.h. in das Diaphragma eindiffundierende Ionen lagern sich im Labyrinthsystem ab, so dass es bei einem Wechsel des Messmediums zur Ausbildung einer zusätzlichen Phasengrenze im Diaphragma kommen kann, die solange bestehen bleibt, bis die zuvor abgelagerten Ionen ausgetauscht sind. Demzufolge kann ein Keramikdiaphragma auf Veränderungen nur mit einer herabgesetzten Anzeigegeschwindigkeit reagieren.

Aufgabe der Erfindung ist es daher, eine Bezugselektrode zur Kombination mit einer Messwertgebersonde für die potentiometrische oder amperometrische Bestimmung von in einem Messmedium enthaltenen ionischen oder nicht-ionischen Bestandteilen zu schaffen, die sich durch einen genau definierten Diffusionsübergang auszeichnet, durch den eine hohe Austauschgeschwindigkeit gewährleistet wird und der auch bei langdauerndem Einsatz konstant bleibt und nicht der Verschmutzung durch Inhaltsstoffe des Messmediums unterliegt. Die Bezugselektrode soll weiterhin so beschaffen sein, dass Potentialverfälschungen, z.B. durch den Einfluss von Redoxindikatoren, auszuschliessen sind.

Die gestellte Aufgabe wird erfindungsgemäss durch die im kennzeichnenden Teil des Patentanspruchs 1 definierte Bezugselektrode gelöst. Diese zeichnet sich dadurch aus, dass sie als Diffusionsübergang ein Diaphragma mit einstellbaren, genau definierten Diffusionswegen aufweist. Dies wird dadurch erreicht, dass das Diaphragma aus einem mindestens teilweise geschlossenen Hohlkörper aus einem porenfreien Material und einen ihn umgebenden, vorzugsweise ringförmigen, Durchlassbereich gebildet ist, wobei die Diffusion und damit der Stoffaustausch nur über diesen Durchlassbereich erfolgen kann. Der Durchlassbereich weist Hohlräume auf, deren Abmessungen genau definiert und exakt einstellbar sind. Diese Hohlräume können im Zuge des Herstellungsverfahrens erzeugt werden, indem der Wandung eines im Elektrodenschaft angebrachten Loches vor dem Einpassen des Hohlkörpers in den Elektrodenschaft durch eine entsprechende Bearbeitung eine bestimmte, einstellbare Rauhigkeit oder Körnung verliehen wird., z.B. durch Bohren des Loches mit einem Bohrer mit einer entsprechend einer gewünschten Diffusionsgeschwindigkeit gewählten Körnung. Durch diese wird einerseits der Abstand zwischen der äusseren Oberfläche des in das Loch eingepassten Hohlkörpers von der umgebenden Wandung des Loches definiert und andererseits das Volumen der Hohlräume bestimmt. Der Abstand stellt dabei das Mass für die radiale Ausdehnung des Durchlassbereiches dar.

Die gestellte Aufgabe wird weiterhin durch das im kennzeichnenden Teil des Patentanspruchs 2 definierte Diaphragma gelöst. Dieses Diaphragma ist mechanisch stabil und gestattet eine exakte Einstellung der Diffusionswege und damit einen genau definierten Stoffaustausch im Betriebszustand.

Besonders vorteilhafte Ausbildungen des Diaphragmas sind in den Ansprüchen 3 bis 6 umschrieben.

Dabei gestattet die Ausbildung gemäss Anspruch 3 ein besonders exaktes Einpassen des Hohlkörpers in das im Elektrodenschaft angebrachte Loch und ermöglicht aufgrund der Materialeigenschaften jede beliebige Formgebung bei hoher Formstabilität im eingesetzten Zustand.

Die Ausbildung gemäss Anspruch 4 ermöglicht einerseits eine spannungsfreie oder zumindest spannungsarme Verbindung zwischen dem Hohlkörper und der Wandung des Elektrodenschaftes und gewährleistet andererseits ein konstantes, praktisch temperaturunabhängiges Ausfliessen des im Sondeninnenraum befindlichen Elektrolyten. Auf diese Weise wird ein vollständiges Ausfliessen des Elektrolyten bei starker Erwärmung des Messmediums und damit des Diaphragmas unterbunden, so dass ein dadurch verursachter Ausfall der Bezugselektrode verhindert werden kann.

Die Ausbildung gemäss Anspruch 5 gestattet eine weitgehende Anpassung der Materialauswahl an die jeweiligen Einsatzbedingungen, wobei in der Regel Glas aufgrund seiner hohen chemischen Resistenz als Material für das Diaphragma bevorzugt ist. Dabei kann insbesondere die Gefahr der Entstehung eines unkontrollierten Potentials, wie im Falle von Diaphragmen aus Platin, weitgehend ausgeschlossen werden.

Ein weiterer Vorteil von Glas als Diaphragmenmaterial ist darin zu sehen, dass Glas zwar bei verhältnismässig niedrigen Temperaturen verformbar ist, die Verformung jedoch bei den im Betriebszustand herrschenden Temperaturen irreversibel ist, so dass ein einmal gebildeter Formkörper seine Form und seine Abmessungen bei diesen Temperaturen unverändert beibehält. Auf diese Weise lassen sich auch durch ein Heraus fallen des in das Loch des Elektrodenschaftes eingepassten Hohlkörpers hervorgerufene Störungen vermeiden.

Die Ausbildung gemäss Anspruch 6 erbringt nicht nur den Vorteil einer spannungsfreien Verbindung zwischen dem Elektrodenschaft und dem eingepassten Diaphragma und eine hohe Masshaltigkeit auch bei den bei der Dampfsterilisation zur Anwendung kommenden Temperaturen, sondern, insbesondere im Falle von Glas, ausserdem eine ausgezeichnete Resistenz gegenüber dem Angriff von Chemikalien, insbesondere von aggressiven Reinigungsmitteln, wie sie beispielsweise beim Einsatz in biologischen Prozessen und in der Getränkeindustrie zur Anwendung kommen.

Die Ausbildung gemäss Anspruch 7 bietet erhebliche messtechnische Vorteile, wobei insbesondere die kurzen Ansprechzeiten der mit dieser Ausbildung des Diaphragmas ausgestatteten Bezugselektroden. Das Diaphragma ist bei dieser Ausführungsform so ausgebildet, dass es ein ionensensitives Element enthält. Diese Ausführungsform weist einen zylindrischen, einseitig geschlossenen Hohlkörper auf, dessen mediumseitig angeordnete Stirnfläche eine ionensensitive Membran ist. Durch die im Inneren des Hohlkörpers angeordnete aus einem flüssigen Innenpuffer und einem chlorierten Silberdraht gebildete Ableiteinrichtung wird das Membranpotential abgeleitet.

Die Herstellung des Diaphragmas der eingangs erwähnten Art erfolgt mittels des im kennzeichnenden Teil des Anspruchs 8 definierten Verfahrens.

Dieses Verfahren erlaubt auf einfache und problemlose Weise die Herstellung des Diaphragmas und die exakte Einpassung des einen Teil des Diaphragmas bildenden Hohlkörpers in das dafür vorgesehene im Elektrodenschaft angebrachte Loch.

Mit einem so hergstellten Diaphragma ausgestattete Bezugselektroden genügen allen an sie gestellten Anforderungen hinsichtlich Ansprechzeit und Messgenauigkeit und liefern stets reproduzierbare Ergebnisse.

Besonders vorteilhafte Ausgestaltungen des Verfahrens sind in den Ansprüchen 9 bis 11 umschrieben.

Die Ausgestaltung gemäss Anspruch 9 lässt sich auf alle der genannten Diaphragmenmaterialien anwenden und erlaubt die Herstellung von Diaphragmen mit genau definierten Abmessungen, ausgezeichneter Masshaltigkeit, auch bei hohen Temperaturen, und hoher mechanischer Stabilität.

Die Ausgestaltung gemäss Anspruch 10 erlaubt auf einfache und problemlose Weise die Herstellung des bevorzugten Glasdiaphragmas. Die Verformung des Glases im Zuge des Herstellungsverfahrens wird zweckmässigerweise bei der Erweichungstemperatur des verwendeten Glases, d.h. bei Temperaturen von annähernd 500° C, vorgenommen. Diese Temperaturen liegen um mehrere 100° C unterhalb der für das Einschmelzen von Diaphragmen aus Keramik oder Quarzfasern anzuwendenden Temperaturen von ca.

1300 °C, was zu erheblichen Energieeinsparungen und zu einer Verminderung des apparativen Aufwandes führt. Ausserdem lässt sich auf diese Weise eine besonders stabile Verbindung mit dem Material des Elektrodenschaftes und eine hohe Druckfestigkeit erzielen.

Die Ausgestaltung nach Anspruch 11 schafft die Voraussetzungen für ein spannungsfreies Einpassen des den Innenteil des Diaphragmas bildenden Hohlkörpers in das im Elektrodenschaft angebrachte Loch, wodurch ein Herauslösen oder Herausfallen im Betriebszustand, auch bei hohen Temperaturen, ausgeschlossen werden kann.

Ausführungsbeispiele werden nachstehend anhand der Zeichnungen beschrieben; dabei zeigen:

Figur 1    den mediumseitigen Teil eines Elektrodenschaftes einer Bezugselektrode im Schnitt;

Figur 2    eine perspektivische Ansicht eines als zylindrischer Hohlkörper ausgebildeten Diaphragmabestandteils;

Figur 3    ein eingesetztes Diaphragma in Draufsicht;

Figur 4    den mediumseitigen Teil eines Elektrodenschaftes mit einem darin enthaltenen ionensensitiven Element im Schnitt.

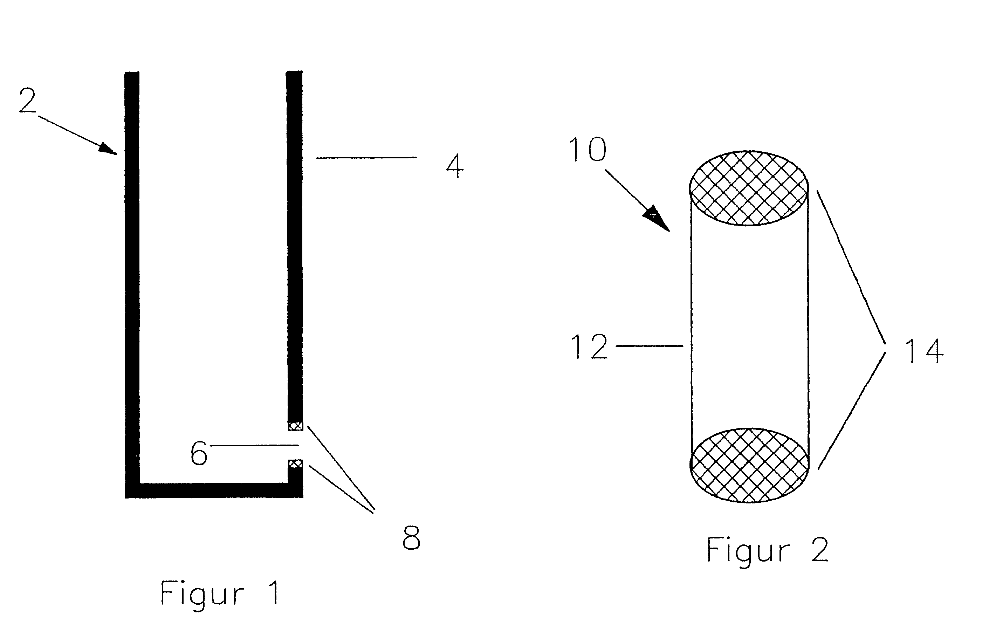

Figur 1 zeigt den mediumseitigen Teil eines Elektrodenschaftes 2 einer Bezugselektrode. Der Elektrodenschaft 2 weist eine Gehäusewandung 4, beispielsweise aus Glas, mit einem seitlich angebrachten Loch 6 auf. Das Loch 6 zeigt eine Wandung 8 mit einer einstellbaren Körnung auf. Das Loch 6 wird zweckmässigerweise durch Bohren mit einem Bohrer mit entsprechend der gewünschten Körnung der Lochwandung 8 gewählter Körnung erzeugt. Sofern der Elektrodenschaft 2 aus Glas besteht, empfiehlt sich die Verwendung eines Diamantbohrers.

Figur 2 zeigt eine perspektivische Ansich eines zylindrisch ausgebildeten Hohlkörpers 10. Der Hohlkörper 10 besteht im vorliegenden Fall aus Glas und ist durch Zuschmelzen eines Glasrohres mit an die Wandstärke des Elektrodenschaftes 2 und die lichte Weite des Loches 6 angepassten Abmessungen hergestellt. Auf diese Weise wird ein Hohlkörper 10 erhalten, dessen, im eingebauten Zustand an die Lochwandung 8 anliegende Seitenwandung 12 eine Wandstärke aufweist, die kleiner ist als diejenige der senkrecht dazu verlaufenden Stirnflächen 14. Der so hergstellte Hohlkörper 10 ist folglich an den Stirnflächen 14 mechanisch stabiler als an der Seitenwandung 12. Das Einpassen des Hohlkörpers 10 in das Loch 6 des Elektrodenschaftes 2 wird zweckmässigerweise, so vorgenommen, dass man ihn nach dem Einsetzen in das Loch 6 auf eine Temperatur erwärmt, die annähernd der Erweichungstemperatur des verwendeten Glases entspricht. Bei dieser Temperatur entwickelt das im Hohlkörper 10 eingeschlossene Gas einen ausreichend hohen Druck, um ihn so zu verformen, dass er fest an die Lochwandung 8 angepresst wird. Die auf diese Weise erzeugte Form des Hohlkörpers 10 bleibt auch bei den im Betriebszustand der Bezugselektrode herrschenden Temperaturen stabil, da Glas zwar durch Einwirkung von Wärme und Druck verformt werden kann, jedoch im Bereich der genannten Betriebstemperaturen kein thermisches Gedächtnis besitzt, so dass die einmal erreichte Verformung irreversibel ist.

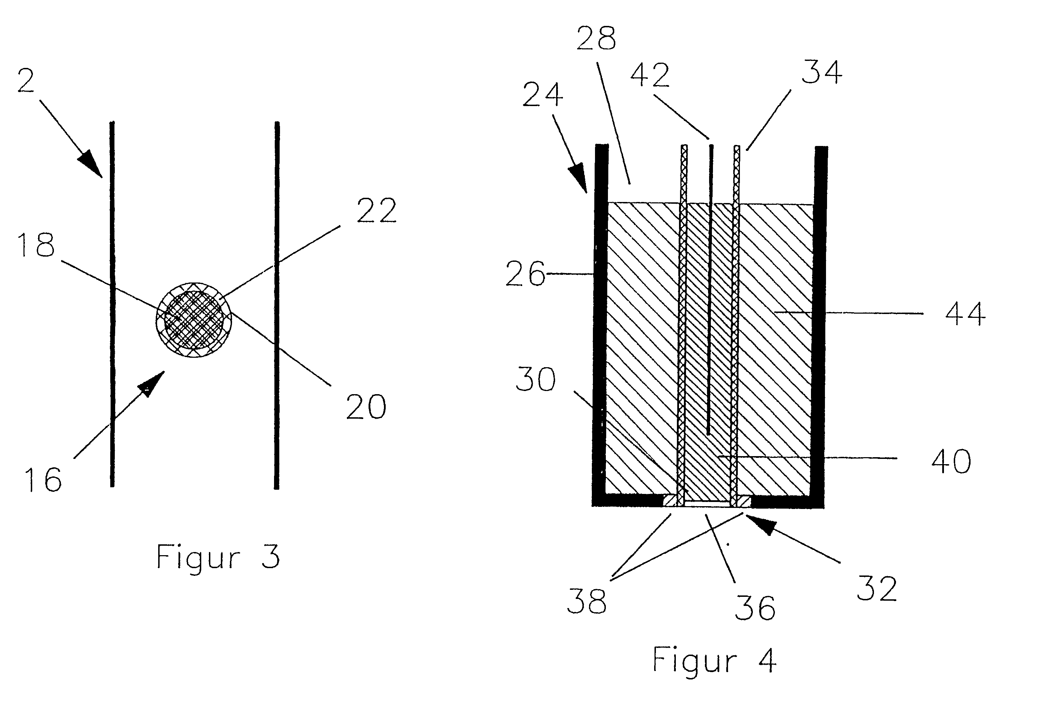

Figur 3 zeigt ein in das Loch 6 des Elektrodenschaftes 2 eingesetztes Diaphragma 16 mit einer der Stirnfläche 14 des Hohlkörpers 10 entsprechenden kreisförmigen Fläche 18, die von einem ringörmigen Durchlassbereich 20 umgeben. Der rinförmige Durchlassbereich 20 weist Hohlräume 22 mit genau definiertem Volumen auf. Die Volumina der Hohlräume 22 werden durch die Körnung der Lochwandung 8 bestimmt und sind so dimensioniert, dass sie ein geringes aber stetiges Abfliessen des Elektrolyten aus dem Inneren des Elektrodenschaftes 2 gestatten.

Figur 4 zeigt den mediumseitigen Teil eines Elektrodenschaftes 24 mit einer Wandung 26, die einen Sondeninnenraum 28 einschliesst, und einem in ein in der Wandung 26 angeordneten Loch 30 eingesetzten Diaphragma 32, in das ein ionensensitives Element integriert ist. Das Diaphragma 32 wird durch einen als einseitig geschlossenen zylindrischen Hohlkörper ausgestalteten Einpasskörper 34 gebildet, dessen im eingebauten Zustand mediumseitig angeordnete Stirnfläche durch eine ionensensitive Membran 36 gebildet ist. Die ionensensitive Membran 36 ist von einem ringförmigen Durchlassbereich 38 umgeben. Im Inneren des als Hohlkörper ausgebildeten Einpasskörpers 34 ist eine Einrichtung zur Ableitung des Membranpotentials angeordnet, die im vorliegenden Fall aus einem flüssigen Innenpuffer 40 und einem chlorierten Silberdraht 42 besteht. Im verbleibenden Teil des Sondeninnenraumes 28 befindet sich ein Referenzelektrolyt 44, der über den ringförmigen Durchlassbereich 38, welcher durch entsprechende Wahl Körnung des bei der Herstellung des Loches 30 verwendeteten Bohrers exakt definierte Hohlräume aufweist, in genau einstellbarer geringer Menge stetig abfliessen kann.

Die in Figur 4 dargestellte Anordnung bietet grosse messtechnische Vorteile, von denen insbesondere die kurze Ansprechzeit hervorzuheben ist.

**Prüfung der Funktion der Bezugselektrode**

Zur Bestimmung der Funktion einer mit Diaphragmen der eingangs erwähnten Art ausgestatteten Bezugselektrode wurden das Diffusionspotential und die Ansprechzeit im Verleich mit Bezugselektroden, die mit herkömmlichen Keramik- oder Glasdiaphragmen ausgestattet waren, bei verschiedenen pH-Werten untersucht.

Bei der Durchführung der Messungen wurden Bezugselektroden mit seitlich angebrachtem Diaphragma verwendet. Die Durchführung der Messungen wurde bei 25°C vorgenommen, wobei das Messmedium konstant gerührt wurde. Die erhaltenen Messwerte sind in den nachfolgenden Tabellen 1 und 2 aufgeführt, wobei in Tabelle 1 die Bestimmung die bei verschiedenen pH-Werten ermittelten Diffusionspotentiale in mV, umgerechnet gegen Argenthal, aufgeführt sind, während in Tabelle 2 die gemessenen Ansprechzeiten in Industrieminuten (dekadische Unterteilung in Sekunden) angegeben und mit [min] bezeichnet sind.

Aus den in den Tabellen 1 und 2 aufgeführten Messergebnissen geht hervor, dass die Diffusionspotentiale sehr klein sind und ausserdem bei Verwendung mit einer pH-Elektrode die Abweichung vom Kettennullpunkt bei pH 7 nur gering ist. Dies stellt gegenüber mit herkömmlichen Glasdiaphragmen ausgestatteten Bezugselektroden eine erhebliche Verbesserung dar. Bei den mit Diaphragmen der eingangs erwähnten Art ausgestatteten Bezugselektroden werden insbesondere die bei mit herkömmlichen Glasdiaphragmen ausgestatteten Bezugselektroden auftretenden Probleme, die auf der Inäquitransferenz für $K^+$ und $Cl^-$ Probleme vermieden.

Aus Tabelle 2 ist ersichtlich, dass sich die mit Diaphragmen der eingangs erwähnten Art ausgestatteten Bezugselektroden durch sehr kurze Ansprechzeiten aus, die kleiner sind als diejenigen von Bezugselektroden, die mit herkömmlichen Keramikdiaphragmen ausgestattet waren.

In den Tabelle 1 und 2 bedeuten:

[mV]  Diffusionspotential umgerechnet nach Argenthal
[min]  Ansprechzeit in Industrieminuten
m  Mittelwert
s  Standardabweiohung

## Tabelle 1

| Dia Nr. | pH 4 [mV] | pH1 [mV] | pH 4 [mV] | pH 7 [mV] | pH 9 [mV] | pH 13 [mV] | pH 9 [mV] | pH 7 [mV] | pH 4 [mV] | 3M KCl [mV] |
|---|---|---|---|---|---|---|---|---|---|---|
| 1 | -0.6 | -0.4 | -0.7 | -0.9 | -1.0 | -1.4 | -1.0 | -1.3 | -1.1 | -0.8 |
| 2 | -0.6 | 0.7 | -0.5 | -0.9 | -0.8 | -1.6 | -1.1 | -1.3 | -0.8 | -0.8 |
| 3 | -0.8 | 1.7 | -0.7 | -0.9 | -1.0 | -1.6 | -1.1 | -1.4 | -1.1 | -0.6 |
| 4 | -0.8 | 1.6 | -0.7 | -1.0 | -0.9 | -1.4 | -1.0 | -1.4 | -0.9 | -0.5 |
| 5 | -1.2 | 0.8 | -1.2 | -1.4 | -1.3 | -1.3 | -1.3 | -1.5 | -1.3 | -0.8 |
| 6 | -1.1 | 1.0 | -1.0 | -1.2 | -1.2 | -2.0 | -1.1 | -1.5 | -1.3 | -0.8 |
| 7 | -0.9 | 0.8 | -0.8 | -1.0 | -0.9 | -1.1 | -1.0 | -1.0 | -1.0 | -0.5 |
| m | -0.9 | 0.9 | -0.8 | -1.0 | -1.0 | -1.5 | -1.1 | -1.3 | -1.1 | -0.7 |
| s | 0.2 | 0.6 | 0.2 | 0.2 | 0.2 | 0.3 | 0.1 | 0.2 | 0.2 | 0.1 |

## Tabelle 2

| Dia Nr. | pH 4 [min. | pH 1 [min. | pH 4 [min. | pH 7 [min. | pH 9 [min. | pH 13 [min.] | pH 9 [min. | pH 7 [min. | pH 4 [min. | 3M KCl [min.] |
|---|---|---|---|---|---|---|---|---|---|---|
| 1 | / | 2.70 | 2.20 | 0.50 | 0.70 | 5.50 | 0.50 | 0.60 | 0.20 | 0.00 |
| 2 | / | 1.80 | 0.00 | 0.50 | 0.30 | 1.90 | 0.00 | 0.70 | 0.00 | 0.00 |
| 3 | / | 2.10 | 3.50 | 1.50 | 0.50 | 3.70 | 2.50 | 0.00 | 0.00 | 0.00 |
| 4 | / | 1.70 | 3.50 | 2.20 | 0.50 | 3.30 | 3.40 | 1.30 | 1.30 | 0.00 |
| 5 | / | 1.50 | 2.00 | 0.00 | 0.00 | 3.90 | 1.80 | 0.60 | 0.40 | 0.00 |
| 6 | / | 3.90 | 0.50 | 0.10 | 10.10 | 9.00 | 0.30 | 0.00 | 0.30 | 0.00 |
| 7 | / | 1.90 | 0.20 | 0.50 | 1.20 | 4.30 | 0.30 | 0.00 | 0.00 | 0.00 |
| m | | 2.23 | 1.70 | 0.76 | 0.61 | 4.51 | 1.26 | 0.46 | 0.31 | 0.00 |
| s | | 0.77 | 1.38 | 0.74 | 0.39 | 2.09 | 1.22 | 0.45 | 0.43 | 0.00 |

**BEZUGSZEICHENLISTE**

2 Elektrodenschaft
4 Wandung des Elektrodenschaftes
6 Loch
8 Lochwandung
10 Hohlkörper
12 Seitenwandung
14 Stirnfläche
16 Diaphragma
18 kreisförmige Fläche
20 ringförmiger Durchlassbereich
22 Hohlräume
24 Elektrodenschaft
26 Wandung

28  Sondeninnenraum

30  Loch

32  Diaphragma

34  Einpasskörper

36  ionensensitive Membran

38  ringförmiger Durchlassbereich

40  Innenpuffer

42  chlorierter Silberdraht

44  Referenzelektrolyt

## Patentansprüche

1. Bezugselektrode zur Kombination mit einer Messwertgebersonde für die potentiometrische oder amperometrische Bestimmung von in einem Messmedium enthaltenen ionischen oder nicht-ionischen Bestandteilen mit einem als Sondengehäuse ausgebildeten Elektrodenschaft, welcher einen Sondeninnenraum, in dem ein Elektrolyt untergebracht ist, und der einen Innenkörper, in den ein sensitives Element integriert ist, einschliesst und dessen Wandung ein Loch aufweist, in das ein Diaphragma als Diffusionsübergang eingesetzt ist, über das im Betriebszustand der Messwertgebersonde ein Stoffaustausch zwischen dem im Sondeninnenraum vorhandenen Elektrolyten und einem Messmedium, in das die Messwertgebersonde im Betriebszustand eintaucht, stattfinden kann, dadurch gekennzeichnet, dass das Diaphragma (16, 32) aus einem mindestens teilweise geschlossenen Hohlkörper (10, 34) aus einem porenfreien, einen Stoffaustausch zwischen dem Sondeninnenraum (28) und einem die Bezugselektrode im Betriebszustand umgebenden Messmedium unterbindenden Material und einem den Hohlkörper (10, 34) umgebenden ringförmigen Durchlassbereich (20, 38) gebildet ist, dass der Hohlkörper (10) derart in ein in der Wandung des Elektrodenschaftes angebrachtes Loch (6, 30) eingepasst ist, dass der Abstand der äusseren Oberfläche des Hohlkörpers (10, 34) von der umgebenden Wandung des Loches (6, 30) durch deren genau definierte und einstellbare Rauhigkeit bestimmt ist und dieser Abstand der radialen Ausdehnung des Durchlassbereiches (20, 38) entspricht, und dass der Durchlassbereich (20, 38) Hohlräume (22) aufweist, die einen Stoffaustausch zwischen den Sondeninnenraum (28) und dem umgebenden Messmedium gestatten.

2. Diaphragma für eine Bezugselektrode nach Anspruch 1, dadurch gekennzeichnet, dass der Hohlkörper (10, 34) als Zylinder ausgebildet ist, dessen die Seitenwandung (12) bildende Mantelfläche eine geringere Wandstärke aufweist als seine senkrecht dazu verlaufenden Stirnflächen (14).

3. Diaphragma nach Anspruch 2, dadurch gekennzeichnet, dass der Hohlkörper (10, 34) aus einem thermisch verformbaren Material, ohne Rückstellvermögen bei den im Betriebszustand der Bezugselektrode herrschenden Temperaturen, gebildet ist.

4. Diaphragma nach Anspruch 2 oder 3, dadurch gekennzeichnet, dass der Hohlkörper (10, 34) aus einem Material besteht, dessen Wärmeausdehnungskoeffizient annähernd gleich demjenigen des Materials ist, aus dem der Elektrodenschaft (2, 24) besteht.

5. Diaphragma nach einem der Ansprüche 2 bis 4, dadurch gekennzeichnet, dass der Hohlkörper (10, 34) aus Glas, Keramik, Glaskeramik, Kunststoff, Metall oder einer Kombination dieser Materialien besteht.

6. Diaphragma nach Anspruch 5, dadurch gekennzeichnet, dass es aus dem gleichen Material wie der Elektrodenschaft (2, 24) gebildet ist und vorzugsweise aus Glas besteht.

7. Diaphragma nach einem der Ansprüche 1 bis 6, dadurch gekennzeichnet, dass es ein ionensensitives Element enthält, das einen zylindisch ausgebildeten Hohlkörper (34) aufweist, in den ein aus einem Innenpuffer (40) und einem chlorierten Silberdraht (42) gebildetes Ableitsystem integriert ist und dessen eine Stirnfläche eine ionensensitive Membran (36) ist, die von einem ringförmigen Durchlassbereich (38) umgeben ist.

8. Verfahren zur Herstellung eines Diaphragmas nach einem der Ansprüche 2 bis 7, dadurch gekennzeichnet, dass man aus einem thermisch verformbaren Material einen Hohlkörper (10, 34) herstellt, in das Loch (6, 30) des Elektrodenschaftes (2, 24) einsetzt, ein- oder beidseitig verschliesst und solange

EP 0 457 143 A1

auf eine Temperatur erwärmt, bei der das verwendete Material verformbar ist, wodurch seine senkrecht zur Wandung des Elektrodenschaftes (2, 24) verlaufenden Seitenwandung durch den angewendeten Druck dicht an die Lochwandung (8) angepresst wird.

9. Verfahren nach Anspruch 8, dadurch gekennzeichnet, dass man einen einseitig offenen Hohlkörper (10, 34) herstellt, in das Loch (6, 30) des Elektrodenschaftes (2, 24) einsetzt und durch Erwärmen unter Anwendung von mechanischem Druck oder mit Hilfe von durch Gas erzeugtem Druck derart verformt, dass seine senkrecht zur Wandung des Elektrodenschaftes (2, 24) verlaufende Seitenwandung (12) dicht an die Lochwandung (8) anliegt.

10. Verfahren nach Anspruch 8, dadurch gekennzeichnet, dass man einen beidseitig geschlossenen Hohlkörper (10) aus Glas herstellt, mit Gas füllt und erwärmt, wobei er verformt und durch den Anstieg des Gasdruckes in seinem Inneren in der Wandung des Elektrodenschaftes (2) angebrachte Loch (6) eingepresst wird, bis seine senk- recht zur Wandung des Elektrodenschaftes (2) verlaufenden Wandungen dicht an die Lochwandung (8) anliegen.

11. Verfahren nach einem der Ansprüche 8 bis 10, dadurch gekennzeichnet, dass man für die Herstellung des Hohlkörpers (10, 34) ein Material verwendet, dessen thermischer Ausdehnungskoeffizient demjenigen des Materials aus dem der Elektrodenschaft (2, 24) gebildet ist, gleich oder mindestens annähernd gleich ist.

EP 0 457 143 A1

Figur 1

Figur 2

Figur 3

Figur 4

EP 0 457 143 A1

Europäisches
Patentamt

**EUROPÄISCHER
RECHERCHENBERICHT**

Nummer der Anmeldung

**EP 91 10 7283**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 709 787   (CONDUCTA GmbH)<br>* Ansprüche 1-4; Figur 1 *<br>- - - | 1 | G 01 N 27/30 |
| A | DE-A-3 123 653   (O. GRIGOLGIT)<br>* Zusammenfassung; Ansprüche 1-2 *<br>- - - | 1 | |
| A | FR-A-2 407 468   (ZELLWEGER USTER S.A.)<br>* Ansprüche 1-3 *<br>- - - | 1 | |
| A | DE-U-8 914 571   (CONDUCTA GmbH)<br>* Ansprüche 1-3; Figuren 3,4 *<br>- - - - - | 1 | |
| | | | **RECHERCHIERTE SACHGEBIETE (Int. Cl.5)**<br><br>G 01 N |

Der vorliegende Recherchenbericht wurde für alle Patentansprüche erstellt

| Recherchenort | Abschlußdatum der Recherche | Prüfer |
|---|---|---|
| Den Haag | 17 Juli 91 | BAROCCI S. |